# EUROPEAN PATENT APPLICATION

(11) **EP 3 340 115 A1**
(43) Date of publication of application: **27.06.2018**
(21) Application number: 16205998.4
(22) Date of filing: 21.12.2016
(51) Int. Cl.: G06N 3/00

(54) **A SYSTEM AND METHOD TO PREDICT THE PATH OF MOVING OBJECTS**

(71) Applicant: FUJITSU LIMITED, Kawasaki-shi Kanagawa 211-8588 (JP)
(72) Inventor: BHASKARAN, Balakrishnan, Exeter, Devon EX4 9DR (GB)
(74) Representative: Fenlon, Christine Lesley

(57) **Abstract**

A method of predicting the possible paths taken by a moving object between non-overlapping sensor networks. A moving object (MO) is detected by a sensor (S12) of one sensor network managed by a regional base station (RB1) which communicates real-time sensor data to a central base station (CB). Using agent-based modelling or another machine-learning algorithm, simulations are run on the basis of the sensor data combined with long-term data including environment information, to obtain one or more predicted paths which are then communicated to other regional base stations (RB2, RB3, RB4, RB5) to facilitate tracking of the moving object. An ensemble-based approach, varying the rules applied in the Agent-based modelling or another machine-learning algorithm, is used to yield probabilistic values for each predicted path. As more sensor data comes in the predictions are constrained and/or the simulations re-run to improve the prediction accuracy.

## Description

### Field of the Invention

The present invention relates to a system and method for predicting paths of moving objects, possibly including people, over a geographical area at least partly equipped with sensor networks.

### Background of the Invention

It is frequently desirable to track the path of a moving object through a geographical area. The term "moving object" includes a vehicle, pedestrian, or other object capable of moving in unpredictable ways, and when applied to a vehicle, the term "moving object" also includes a human occupant(s) of the vehicle as well as the vehicle itself. For example a road vehicle in a traffic network may follow any of a number of paths, depending on decisions of the driver as well as external influences such as the actions of other vehicles.

Effective technologies are available to track moving objects through a network of overlapping sensors, for example a traffic monitoring network consisting of CCTVs, road sensors and the like within a town. However, if the moving object leaves one network of sensors, it may become untraceable until it enters another network of sensors (for example, one CCTV sensor network of a town to another CCTV sensor network of the same town or a different town). There is a need for techniques to track moving objects in such a situation.

Since an embodiment of the present invention employs the concept of an "agent" for tracking a moving object, some background explanation will be given concerning agent-based modelling (ABM). ABM is of extremely wide-ranging application but here we consider only aspects relevant to tracking a moving object.

ABM is an approach suited to modelling systems comprised of autonomous, interacting agents. In this context, an "agent" is some kind of independent model representing an object of interest, and capable of being defined and simulated in software. The agents represent the active entities in the system and depending on the kind of system being modelled there may be one kind or several. Thus, in the field of interest there would be at least agents for moving objects; and normally one agent would be defined for each moving object to be tracked (and possibly also defined for other moving objects which need not be of interest in themselves, but may interact with the moving object of interest). An individual agent's behaviour can range from simple in nature and described by simple if/then rules, to the complex, such as a car having a human driver, described by complex behavioural models. The first type of agent just mentioned may be referred to as "reactive" agents and the second as "cognitive" agents. It is this second type which is of most relevance for the invention to be described.

Agents, or at least "cognitive" agents, can be assumed to have certain properties and attributes:
(i) An agent is autonomous: that is, it can function independently in its environment and in its interactions with other agents, generally from a limited range of situations that are of interest. For example a vehicle functions in the environment of a road network and interacts with other agents in the form of other road users.
(ii) Agents are modular or self-contained. An agent is an identifiable, discrete individual with a set of characteristics or attributes, behaviours, and decision-making capability. For example in the case of a moving object the characteristics include not only attributes of the vehicle itself (e.g. speed, type of road or track it may follow) but also behaviours and decision-making capabilities of the driver of the vehicle. A simple example of such behaviours is that a vehicle which is prevented from turning left at a given road junction can be expected to turn left at the next opportunity.
(iii) Agents interact with other agents. Agents have behaviours (expressed in software terms as protocols or mechanisms) that describe how they interact with other agents. For example a vehicle may compete with other vehicles for road space, parking and the like whilst avoiding collisions with other vehicles. To simulate these interactions, it may be necessary to define an agent's internal model of the external world, including its reactions to actions of other agents. Agent interactions may also need to consider exchange of information between agents. Usually, only interactions between agents in the same immediate vicinity need to be considered: for example a vehicle will normally interact with other vehicles immediately in front of and behind it. As one example of such an interaction, a vehicle which finds that its neighbours are stationary in a traffic jam may look for a different route.
(iv) Agents are influenced by their environment. Agents interact with their environment as well as with other agents so the agent's behaviour may be situationally dependent, which means that its behaviour is based both on the current state of its interactions with other agents and with the environment. For example a vehicle behaviour may depend on weather conditions, time of day, and so on. Roadworks may result in closure of a road, thus constraining the possible paths of the vehicle.
(v) An agent may have explicit goals that drive its behaviour. The goals are not necessarily objectives to maximize, but may instead be criteria against which to assess the effectiveness of its decision and actions. For example a stolen vehicle may be driven in a different manner from that of a worker on his or her daily commute: the goal in the first case may be to evade capture at any cost whilst in the second case the goal may be to arrive at the destination with least effort.
(vi) An agent may have the ability to learn and adapt its behaviours based on its experiences. For example a moving object may preferentially follow a certain path through a road network owing to habit of the driver. Individual learning and adaptation requires an agent to have memory, usually in the form of a dynamic agent attribute. Historical information on movements of vehicles in a range of scenarios can provide an insight into such behaviours.

From the above it can be seen that whilst agents can be classed as software objects, they differ from conventional objects of the kind that execute only when invoked, always execute as predicted, and have static relationships to other objects. Agents execute autonomously, may not execute as predicted, and have dynamic relationships to other agents. In short, agents are unpredictable and will behave differently in different situations.

To produce a useful agent model for ABM it is necessary first to identify the kinds (classes) of agents required along with their attributes, to accurately specify their behaviours, and account for interactions with other agents. To describe agent behaviour, it may be necessary to capture not only formalistic behaviours (such as traffic rules in the case of a moving object) but also elements of human and social behaviour. For this, a formal behavioural modelling framework such as BDI (Belief Desire Intent) may be used.

Interactions with other agents may be accounted for by defining agent relationships along with rules which agents interact, when they interact, and how they interact. As part of this it is usually necessary to define the space within which agents interact, for example the road network of a geographical area of interest in the case of road vehicles. For this purpose, a Geographical Information System (GIS) may be employed.

As already mentioned, all of the above is implemented in software. Simple ABM can be performed using a spreadsheet where each cell represents an agent rather than a number. Object-oriented programming is a good fit with the needs of ABM. Although originally developed for educational purposes, NetLogo, a programming language based on Logo and which provides a graphical environment in which reactive agents in the form of "turtles" exist in a world of "patches" and are monitored by an "observer", can be applied to ABM. More sophisticated models are possible using special-purpose software tools based on object-oriented programming languages, such as Swarm and Repast (both based on Objective-C). ABM systems may also be implemented using general-purpose mathematical software such as MATLAB.

Of course, it is not sufficient merely to define the agents: to model the system to which ABM is being applied it is necessary to perform a simulation by allowing the agents to interact over a suitable time period; in this way the behaviour of the system (including that of any given agent) emerges as a result of interactions of many individual agent behaviours. Depending on the number and sophistication of the agents defined, the simulation can be run either on a single desktop computer, cluster of computers, or computational grid.

Another simulation technique of relevance to the present invention is the "ensemble" method in which multiple simulations are conducted using slightly different initial conditions that are all plausible given the past and current set of observations, or measurements. Sometimes the ensemble may use different models for different members, or different formulations of the same model. The multiple simulations are conducted to account for both errors in measurement and uncertainties as to the correct model formulation to be used. Monitoring the progress of the simulations by comparing predictions with incoming real data allows the ensemble to be thinned by discarding the least accurate ones.

As already mentioned, traditionally moving objects are monitored/tracked using a network of sensors with overlapping coverage. In many practical situations the sensor coverage is sparse, and the sensors do not cover the entire area of interest. This results in blind spots.

Whilst in some cases moving objects may be trackable using a mobile phone signal or through GPS (for example if an occupant has a smartphone with GPS activated), it cannot be assumed that such signals will be available particularly in the case of a criminal suspect, senior citizen, or child. There is consequently a need for improved tracking techniques in such cases.

### Summary of the Invention

Embodiments of the present invention are directed towards providing a system and method that enables continuous tracking of moving objects, when the objects are moving between discontinuous coverage areas of sensor networks.

According to a first aspect of the present invention, there is provided a system for predicting the path of a moving object comprising:
real time data sources including a plurality of sensor networks each having a plurality of sensors for outputting sensor data characteristic of a moving object;
long-term data sources including a database of environment information, the environment information affecting movement of the moving object;
an analytics engine arranged to generate parameters of simulations on the basis of the real-time data and the long-term data; and
a prediction engine arranged to generate predicted paths of the moving object by executing simulations using said parameters to track the moving object through a geographical area outside a detection range of the plurality of sensor networks.

Preferably, in the above system, the analytics engine is further arranged to update the parameters as new real-time data is received.

The prediction engine may be further arranged to receive the real-time data and to constrain the predicted paths on the basis of the real-time data.

In one embodiment, the simulations are executed as an ensemble of predictive models each differing in the parameters applied to the simulations. In this case the results of the ensemble may be used to assign probabilities to each of the plurality of predicted paths.

Further, the simulations may be executed using agent-based modelling (ABM) in which an agent represents the moving object and the parameters comprise rules of behaviour of agents.

As an addition or alternative to ABM, the simulations can be executed using machine learning in which the parameters comprise training data for the machine learning.

In any system as defined above, the long-term data sources may include a database of historical information on past behaviour of objects of the same type as the moving object.

Where historical information is available, the analytics engine is preferably arranged to combine the historical information with the real-time data when generating said parameters.

In any system as defined above, the real-time data sources may provide real-time data on one or more of:
time of day
day of week
weather conditions
public events
road works
traffic conditions,
each within a geographical area over which the paths are predicted.

In any system as defined above, each sensor network may be managed by a regional base station, each regional base station having a coverage area and linked to a central base station. The coverage areas may be sub-areas of the above mentioned geographical area. The term "base station" does not necessarily imply a base station in the sense of wireless communication, but may include such a wireless communication base station.

This arrangement allows a predicted path to be communicated from the central base station to at least one regional base station into the coverage area of which the predicted path extends.

The central base station mentioned above may provide the analytics engine and the prediction engine.

According to a second aspect of the present invention, there is provided a method of predicting the path of a moving object, the method comprising:
storing long-term data including environment information affecting movement of the moving object;
obtaining, from a plurality of sensors tracking the moving object, real time data including sensor data characteristic of the moving object;
calculating parameters of simulations on the basis of the real-time data and the long-term data; and
executing simulations using said parameters to generate predicted paths of the moving object in an effort to track the moving object outside a range of the plurality of sensors.

A further aspect of the present invention provides software in the form of computer-readable instructions which, when executed by a processor, perform the method as defined above. The instructions may be stored on one or more non-transitory computer-readable recording media.

Embodiments of the present invention employ an innovative method that takes advantage of the compute power available at sensor nodes, to simulate possible paths taken by a moving objects before the object is physically identified by another adjacent network of sensors. The predictive analyses are driven by the data acquired from the sensors and other independent networks such as social media in real time and previously stored relevant historical data, augmented by model simulations. Predicted path information is continuously calibrated and updated through model simulations using the data collected in real time.

Features detailed above with respect to any different aspects may be combined with any or all the features of the other aspects since they refer to the same invention.

### Brief Description of the Drawings

Figure 1 illustrates a principle employed in embodiments by which identification of a moving object (for example a car) is identified by a sensor and reported to a central base station;
Figure 2 is a schematic representation of an agent employed in embodiments;
Figure 3 illustrates a collection of sensor networks and communication of a projected path between networks;
Figure 4 depicts the main components used in an embodiment of the present invention;
Figure 5 is a schematic block diagram of a Data Module employed in an embodiment;
Figure 6 illustrates the interaction between the Data Module and an Analytics Engine used in embodiments;
Figure 7 is a schematic block diagram of a Prediction Engine used in embodiments; and
Figure 8 is a schematic block diagram of a computing device applicable to one or more components used in embodiments.

### Detailed Description

An embodiment of the present invention will now be described, referring to ABM by way of example. It should be noted, however, that the present invention is not limited to ABM. Further, although ABM has conventionally been applied to modelling of a system as a whole, the aim in this embodiment is not to predict the aggregate behaviour of a system (e.g. traffic network) but rather to predict the likely path of one specific moving object.

The embodiment assumes a geographical area such as a district containing several towns, each town provided with a wireless communication network having a certain coverage area, whilst rural areas between the towns are not necessarily served by a wireless communication network.

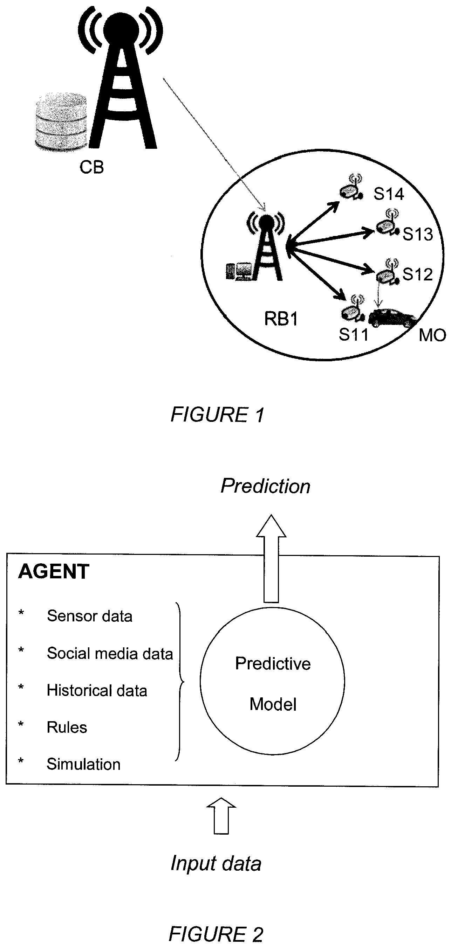

Figure 1 shows part of one such network, in which a regional base station RB1, which manages a network of wireless sensors S11, S12, S13 and S14 deployed to detect and track a moving object MO, is connected to a central base station CB.

In the embodiment to be described, the moving object MO is a road vehicle and in this case the sensor network may be an existing network installed for traffic monitoring purposes. More generally, possible sensors include but are not limited to:
* Optical sensors (CCTV cameras)
* Acoustic / Sonar sensors
* Magnetic sensors
* Chemical sensors

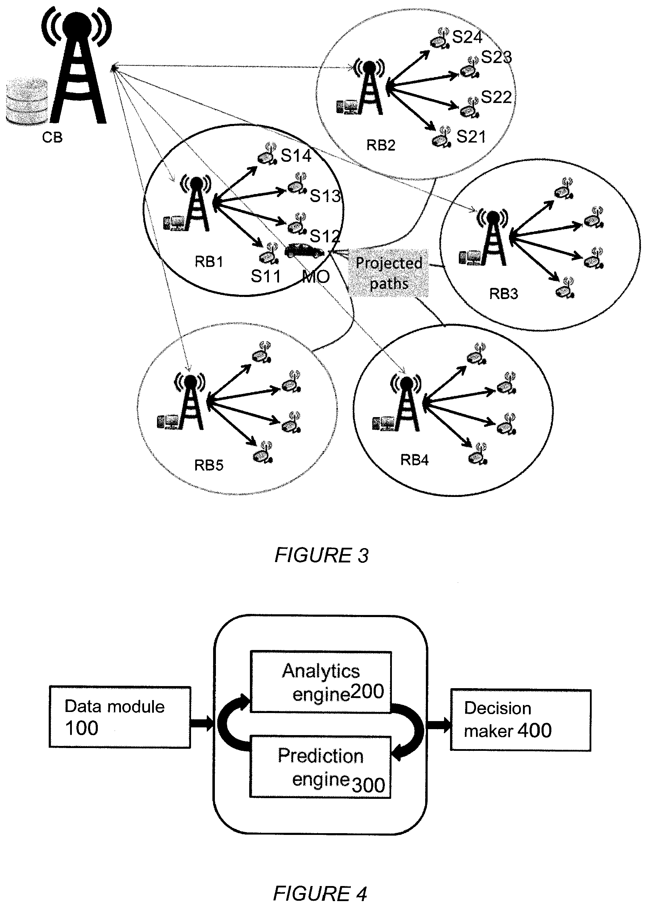

As illustrated in Figure 3, this regional base station RB1 may be one of many regional base stations RB1 - RB5 deployed over the geographical area but with coverage gaps in between the coverage areas of the respective base stations, each of which is provided with its own sensor network. The problem in this case is to predict the possible paths taken by the moving object between the dedicated sensor networks.

The method of the invention is first triggered in some way. For example, in the case where the moving object is a road vehicle, the trigger for the method may be a report that the vehicle has been stolen. Once the interest in a particular moving object is activated over a city or a cellular network, its characteristics are quantified and loaded onto a database accessible to the central base station CB. Information about the target object characteristics may include, in the case of optical sensors, an image from a still or video camera, possibly augmented by an edge detecting algorithm providing shape information about the object. In the case of an acoustic sensor, the information may specify the sound signature a vehicle is expected to make as it passes the sensor. In the case of magnetic sensors for example, the information may relate to the amount of disturbance in Earth's magnetic field generated by the object. Likewise in the case of a chemical sensor, the composition of exhaust gases of the vehicle would be relevant.

This information about the target object characteristics is then communicated to regional base stations RB1, RB2, RB3 etc (see Fig. 3) and eventually to the wireless sensor networks such as S11 - S14 of RB1, deployed over the geographical area of interest, for example on roads of a road network.

The regional base stations, in turn, provide the sensors with information about the type or shape of object to be tracked, for example the fact that the object is a car of a certain colour and model. The sensor can use this information to compare its own sensor information with the object to be tracked. When an individual sensor such as S12 in Fig. 1 detects the object by comparing its own sensed information with the supplied information, it will then communicate this information to the regional base station RB1 in this instance. The regional base station is responsible for verifying the sensor data. This can include corroborating a detection by one sensor by detections of other neighbouring sensors, thereby reducing false detections. Whilst sensor data from any one individual sensor may not be conclusive in itself, sensor information of a plurality of sensors (especially of different types) may be strongly indicative that a given object has been detected. Once the information is verified (i.e. judged at the sensor to be a detection of the object MO), it is then shared with the other regional base stations RB2, RB3 etc. and with the central base station CB.

The regional base station RB1 that originally discovered the object of interest activates other sensors S11, S13, S14 within its region, proactively looking for the object MO in other parts of its coverage area. Once the object is identified by the other sensors, ABM or another machine learning technique is conducted (preferably at the central base station CB, but also possibly at the regional base station or even at a sensor node) using the sensor data, to predict the future direction of the moving object.

Figure 2 illustrates the main properties/functions of an agent as employed in this embodiment. Firstly, the agent receives input data, which can include sensor data as well as other real-time data, as well as long-term data including historical data as described in more detail later. For example, the agent can analyse information collected from the sensor such as temporal and spatial locations of the object, and direction of its movement. As indicated in Figure 2, the sensor data is combined with other types of data including social media data and historical data so as to provide information on other social/sports/political/weather events taking place in the region at that time. Rules for the agent can be formulated using this data, and complemented by deriving additional rules using prior known information about the moving object, such as size and type of the object (a car for example). A predictive model is then used to run simulations, the results of which provide a prediction of the future direction and speed of the moving object. This prediction is continuously updated using the real-time detection information continuously received from the other sensors in the region. For example, detections by sensors in a new coverage area indicates that the object has followed a path to that coverage area rather than any predicted path to other coverage areas; those other predictions can then be discarded.

Thus, the projected path of a car is predicted by (in this embodiment) ABM at the regional base station, and as indicated in Figure 3 there may be a plurality of predicted paths leading to coverage areas of more than one other regional base station. Once the object moves outside the regional base station area (for example, outside a city or a cellular base station), this prediction information is then passed on to the adjacent regional base station(s) the coverage area of which the object is predicted to enter. The prediction information can include a predicted location in the new coverage area (for example, a location where a road on which the object is predicted to follow enters the coverage area).

The method uses the analysis of the sensed information in the context of other geographical events information to build a predictive model (ABM and/or machine learning). This predictive model is continuously updated/calibrated using the real-time information received from other sensors to track a moving object. This method can be implemented within the current communication infrastructure such as cellular wireless communication networks. The regional base stations may be cellular base stations equipped with additional computing power. The neighbouring regional base stations are not necessarily operated by the same network provider. Multiple operator networks can collaborate and exchange identity and tracking information of the moving object. Currently, wireless communication networks are transitioning to so-called 5^{th}-generation (5G) standards. In a 5G world, all cellular base stations are expected to host substantial computing resources, and with lower latency for device to device communications. The method of the invention can readily be transferred to such a future network.

The predicted path is verified when the object enters another network. If the verification is successful (that is, the object from one network (one town) entered another network (another town) as predicted), then the prediction stops and tracking starts within the second network. As soon as the object leaves the second network, the prediction is started by the second RB to predict its path. The predicted information is then passed on to the appropriate RB in the adjacent region.

Figure 4 depicts the main components used in an embodiment, which comprise a Data Module 100, an Analytics Engine 200, Prediction Engine 300, and a Decision Maker 400. As indicated by the Figure, the data module 100 provides input to the (agent consisting of the) analytics engine 200 and the prediction engine 300. Using ABM or other algorithms, the prediction engine provides an output in the form of one or more predicted paths to the decision maker 400. These components may be provided at the central base station CB, at any of the regional base stations, or both. In one embodiment, all the modules are located at the central base station CB. In another embodiment, the data module 100 is provided at the central base station CB with each regional base station having its own analytics engine 200 and prediction engine 300. In a further embodiment, at least a simplified form of the prediction engine 300 is implemented at the level of a sensor node.

### Data Module 100

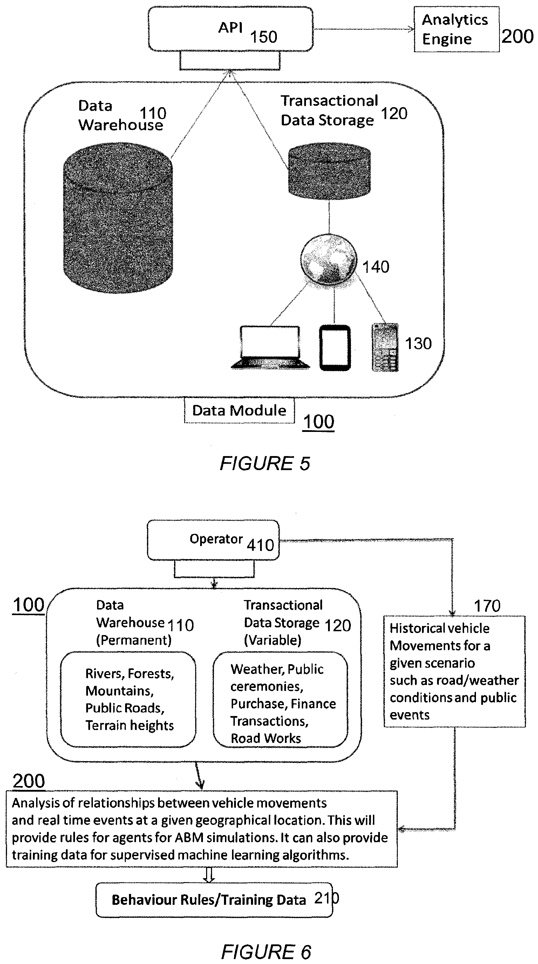

The data module 100 is shown in Figure 5 and its main components are a data warehouse 110, a transactional data storage 120, and Application Programming Interface (API) 150. In Figure 5, 130 represents sensor inputs and other various inputs to the transactional data storage via a network 140 such as the Internet. This data module 100 hosts database technologies capable of storing a variety of long-term and historical data, as well as receiving and collating semi-structured and unstructured instantaneous data in real time for further analysis. For example, the real time data may be arriving from the sensors, whereas the past data can be related to the pre-processed geopolitical and environmental information. The data for analysis is supplied via API 150 to the analytics engine 200.

Figure 6 illustrates the functional interaction between the data warehouse 110 and the analytics engine 200. The data warehouse 110 is for storing long-term or permanent data such as environment information including details of the terrain including rivers, forests, mountains, and terrain heights. The environment information may also include, in the case of tracking a road vehicle, a map of the road network in the area of interest including details of road capacity (number of lanes), speed limits, the layout of junctions and provision of traffic lights, and so forth.

The transactional data storage 120 is for storing data of a more transient or dynamic nature including real-time data coming in from the sensors. Real-time data from other inputs 130 may serve to augment the environment information: for example, accidents, road blocks, roadworks and weather conditions (such as ice and snow on the road) will all affect the road network. The time of day (such as rush-hour in the case of a road network) and number and/or locations of other objects (such as traffic density in a road network) are other real-time inputs.

This real-time information can also be complemented by other relevant data available from other repositories. In particular, historical data 170 may be employed to aid the prediction process. For example, information on historical vehicle movements for a given scenario, such as a given set of road and weather conditions, or a public event such as a sports match or public holiday, may be held in the transactional data storage 120. Such historical data will usually apply to objects of the same general type as the moving object of interest (such as the same class of road vehicle, e.g. car), rather than to the specific moving object of interest.

### Analytics Engine 200

As indicated in Figure 6, the analytics engine 200 analyses the data prepared in the data module 100, namely the data gathered from the sensors about the moving object (real-time) plus other social/political/geographical/weather events taking place in the region to provide input 210 for the predictive models in the prediction engine 300. For example, this input 210 can be in the form of rules for the agents to be used in ABM simulations, or training data for the supervised machine learning algorithms.

### Prediction Engine 300

The prediction engine can be implemented, for example, in the central base station CB and runs prediction algorithms on the basis of the input 210 from the analytics engine 200, initiated by a trigger from a central command 500. It should be noted that this central command may be the same as the decision maker 400 and/or the operator 410 referred to elsewhere.

The prediction engine runs ABM simulations or machine learning algorithms, to predict the future behaviour (direction and speed) of the moving object. In the case of employing ABM, agents would normally include vehicle agents (one of which represents a specific vehicle to be tracked).

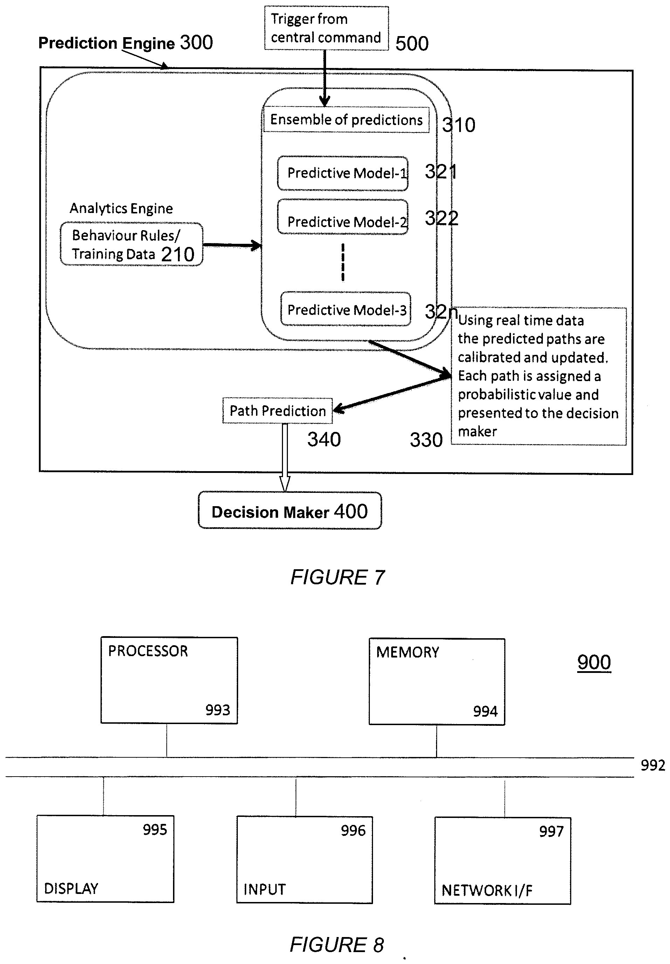

More particularly, as illustrated in Figure 7 the prediction engine 300 runs an ensemble 310 of prediction simulations. Each predictive model 321, 322 to 32n is started at the same time and provides a respective prediction (predicted path). As indicated at 330, using the real-time data received from sensors and other sources, the respective paths predicted by the prediction algorithms are updated and calibrated to yield a path prediction 340 in the form of, for example, a ranked list of predicted paths in order of likelihood. Probabilistic information is attached to each track prediction and presented to the decision maker 400 through the user interface.

The ensemble method is applied here to account for the uncertainty in model predictions due to unpredictable human behaviour. The ensemble of path simulations is achieved by varying the parameters (estimated and applied in the analytics engine) to yield a plurality of predictive models 321, 322 to 32n. This is a novel way of capturing uncertainty in human behaviour. The advantage of the ensemble approach is that it will allocate probabilistic values for each possible path that the moving object might have taken.

The ensemble approach provides probabilistic prediction (as opposed to deterministic approach). Each prediction model employs ABM for example. If one set of behaviour rules is defined for a given environment, ABM will deterministically yield one predicted path. Because of uncertainty in agent behaviour for the same environment, it is preferable to develop n sets of slightly different behaviour rules which appear to be equally valid. Then there are n ABM simulations, giving n possible paths. Supposing that n=100 for example and if 80 ABM simulations identify the same path, then this path is assigned a probability of 80%. Another path may be common to another 10 of the simulations and therefore assigned a probability of 10%, and so on.

Similarly, if prediction is made using, for example, multiple regression, one path can be predicted as one set of parameters of the regression model. When one slightly perturbs the parameters, a different path results. This way multiple simulations can be carried out resulting in multiple paths. Because it is probabilistic, it is better for a human being, namely the Decision Maker 400, to make the final decision (such as despatching police officers to a certain location). Alternatively, a probability threshold can be defined by the decision maker, so that the next step is automatically taken (for example alerting police in the vicinity of a predicted path exceeding a threshold likelihood).

One novel feature of the above approach lies in the fact that the projections made by the algorithms will be continuously constrained by assimilating the data that is received from the sensors to minimize the prediction error. Thus, the predicted path is compared and validated and updated. If the predicted path is different from the observed path (observed by sensors), it is discarded. The predictive simulations can be re-run as new simulations with new behavioural rules, if the real-time observations provide new information about the possible tracks that the vehicle might have taken. For example, a new piece of relevant information can be used to train the learning algorithm or help develop agent rules in the analytics engine to run Machine Learning and ABM simulations respectively. Thus, the ensemble is dynamic in the sense that predictive models may die out and new ones may be generated in the light of incoming data.

Another advantage is that the predictive engine can be thinned sufficiently to be able to run at the sensor nodes, if they have enough computing resources. That is, the rules can be less complex for a smaller area covered by the sensor node, and less complex behaviour rules make the predictive simulations lighter. This will help run increased number of ensemble simulations, increasing the accuracy of the track prediction. In this modification of the above embodiment, the network of sensors will run their own simulations which can be coordinated by the regional or central base station, enabling the rapid detection of moving objects. However, it should be noted that the algorithm will still work even if the sensor nodes are not capable of running their own predictions. If the sensor nodes are capable of running the predictions, the RB/CB will coordinate the predictions and verifications before the RB/CB or the operator makes the final decision.

### Decision Maker 400

This is a human manager (and may be the same as the operator 410 referred to above). A police supervisor, army officer, town administrator or the like may fill this role. The Decision Maker is responsible for taking decisions on the basis of the output of the prediction engine 300. For example, in the case where the moving object MO is a stolen vehicle, the Decision Maker 400 may send police to one or more locations predicted for the moving object in order to stop the vehicle and apprehend the driver. Based on personal knowledge and intuition, the Decision Maker may make a judgement on the basis of the predictions of the prediction engine, perhaps to act preferentially on one predicted path rather than another.

Agent based modelling and simulation can be accomplished by using a desktop computer, computing clusters, or clusters on computational Grids depending on the number of interacting agents and complexity of the model.

Figure 8 is a block diagram of a computing device 900 which embodies the present invention, and which may be used to implement one or more of the Data Module, Analytics Engine, and Prediction Engine. The computing device comprises a processor 993, and memory, 994. Optionally, the computing device 900 also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations of, or to implement, the above mentioned Data Module, Analytics Engine, and Prediction Engine. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CDROM) or other optical disk storage, magnetic disk storage or other magnetic storage devices, flash memory devices (e.g., solid state memory devices).

The processor 993 is configured to control the computing device 900 and execute processing operations, for example executing code stored in the memory to implement the various different functions of the Data Module 100, Analytics Engine 200, and Prediction Engine 300 described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device 900 and may also display a cursor and dialog boxes and screens enabling interaction between a user and the programs and data stored on the computing device. The input mechanisms 996 may enable a user, such as the above mentioned operator or decision maker, to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The Data Module 100 may comprise processing instructions stored on a portion of the memory 994, the processor 993 to execute the processing instructions, a portion of the memory 994 to store data during the execution of the processing instructions and possibly also providing the Transactional Data Storage 120, and further comprises the above mentioned Data Warehouse 110 which may be external to the computing device 900.

The output of the Analytics Engine may be stored on the memory 994 and/or on a connected storage unit, and may be communicated to the analytics engine 200.

The Analytics Engine 200 may comprise processing instructions stored on a portion of the memory 994, the processor 993 to execute the processing instructions, and a portion of the memory 994 to store data during the execution of the processing instructions. The output of the analytics engine may be stored on the memory 994 and/or on a connected storage unit, and may be communicated to the prediction engine 300.

The Prediction Engine 300 may comprise processing instructions stored on a portion of the memory 994, the processor 993 to execute the processing instructions, and a portion of the memory 994 to store data during the execution of the processing instructions. The output of the prediction engine may be stored on the memory 994 and/or on a connected storage unit, and may be presented to an operator via the display unit 997.

Methods embodying the present invention may be carried out on a computing device such as that illustrated in Figure 8. Such a computing device need not have every component illustrated in Figure 8, and may be composed of a subset of those components. A method embodying the present invention may be carried out by a single computing device in communication with one or more data storage servers via a network. Alternatively, a method embodying the present invention may be carried out by a plurality of computing devices operating in cooperation with one another.

To summarise, embodiments of the present invention relate to a method of predicting the possible paths taken by a moving object between non-overlapping sensor networks. A moving object is detected by a sensor of one sensor network managed by a regional base station which communicates real-time sensor data to a central base station. Using agent-based modelling or another machine-learning algorithm, simulations are run on the basis of the sensor data combined with long-term data including environment information, to obtain one or more predicted paths which are then communicated to other regional base stations to facilitate tracking of the moving object. An ensemble-based approach, varying the rules applied in the Agent-based modelling or another machine-learning algorithm, is used to yield probabilistic values for each predicted path. As more sensor data comes in the predictions are constrained and/or the simulations re-run to improve the prediction accuracy.

Various modifications are possible within the scope of the invention.

Although in the above embodiment, the prediction engine was located at each regional base station, this is not essential. As already mentioned, a thinned-out version may be implemented in each sensor node (such as S11 - S14 or S21 - S24 in Figure 3). Alternatively the prediction engine may be provided at the central base station CB.

In the above embodiment, the data warehouse 110 is shown as part of the data module 100. However, as will be understood by a person of skill in the art, it is sufficient for the data module to have access to permanent storage located remotely, including "in the cloud".

Above, the term "central base station CB" is used for convenience. However, a central "base station" in the sense used in wireless communication is not essential and the central base station CB may be more generally thought of as a control centre or the like.

Reference was made above to Agent Based Modelling, ABM. It should be noted that ABM is also known as, or at least closely related to, ABS (Agent Based Simulation), ABMS (Agent-Based Modelling and Simulation), IBM (Individual-Based Models), and MAS (Multi-Agent Systems). References below to ABM include these terms also. ABM can involve so-called "machine learning", which term also encompasses, for example, neural networks, logistic regression, decision trees and gradient boosting For example, instead of using behavioural rules to define how an agent should respond, it is possible to deploy ML algorithms that enable the agents to make decisions.

Furthermore, as already mentioned, the present invention is not limited to using ABM. Other modelling or machine learning algorithms may be applied instead of, or in addition to, ABM. In particular, Deep Learning Algorithms such as Artificial Neural Networks (ANN) can be applied for classification to identify and track the objects. For example, using the past data of labels and corresponding features (label: car, features: 3m long, 2m high, 1.8m wide), an ANN can be trained. This trained ANN can be applied using the sensor or prior information (features) to identify the object (label).

As another example, the Interacting Multiple Model Kalman Filter uses sensor data to update a bank of Kalman filters and then find the filter which most closely models a current mode of operation of a vehicle. Hidden Markov models may also be applicable, in which a set of possible paths is fed into a prediction filter and the output is a predicted path.

Whilst the above embodiment is directed towards predicting the path of a specific moving object, it is of course possible to repeat the simulation for any number of moving objects, given sufficient computing resources. This can be used, for example to predict vehicular traffic congestion and allow an operator to take measures to prevent traffic jams.

Features in embodiments include the following:
- This method does not require any transmitting devices to be available on the moving target, such as GPS or mobile phone signal etc.
- There is no need for the sensor network to cover the entire area of interest.
- This method will enable tracking of a moving object when it disappears from one sensor (or network) and enters the other sensor (or network), using the predictive analytics.

### Industrial Applicability

Embodiments of the present invention are applicable to a wide range of application areas including:
* Defence Applications
   - for example, Monitoring Forces, Equipment and Ammunition Transport, Battlefield Surveillance
* Environmental Applications
   - Forest Fire Detection
   - Flood Detection
* Other Applications
   - Telemonitoring of a person of interest or object
   - Telemonitoring of suspicious activities

## Claims

1. A system for predicting the path of a moving object comprising:
real time data sources including a plurality of sensor networks each having a plurality of sensors for outputting sensor data characteristic of a moving object;
long-term data sources including a database of environment information affecting movement of the moving object;
an analytics engine arranged to generate parameters of simulations on the basis of the real-time data and the long-term data; and
a prediction engine arrangedto generate predicted paths of the moving object by executing simulations using said parameters to track the moving object through a geographical area outside a detection range of the plurality of sensor networks.

2. The system according to claim 1 wherein the analytics engine is further arranged to update the parameters as new real-time data is received.

3. The system according to claim 1 or 2 wherein the prediction engine is further arranged to receive the real-time data and to constrain the predicted paths on the basis of the real-time data.

4. The system according to any preceding claim wherein the simulations are executed as an ensemble of predictive models each differing in the parameters applied to the simulations.

5. The system according to claim 4 wherein probabilities are assigned to the predicted paths.

6. The system according to any preceding claim wherein the simulations are executed using agent-based modelling in which an agent represents the moving object and the parameters comprise rules of behaviour of agents.

7. The system according to any preceding claim wherein the simulations are executed using machine learning in which the parameters comprise training data for the machine learning.

8. The system according to any preceding claim wherein the long-term data sources further include a database of historical information on past behaviour of objects of the same type as the moving object.

9. The system according to claim 8 wherein the analytics engine is further arranged to combine the historical information with the real-time data when generating said parameters.

10. The system according to any preceding claim wherein the real-time data sources further provide real-time data on one or more of:
time of day
day of week
weather conditions
public events
road works
traffic conditions.

11. The system according to any preceding claim wherein each sensor network is managed by a regional base station, each regional base station having a coverage area and linked to a central base station.

12. The system according to claim 11 wherein a predicted path is communicated from the central base station to at least one regional base station into the coverage area of which the predicted path extends.

13. The system according to claim 11 or 12 wherein the analytics engine and the prediction engine are provided by the central base station.

14. A method of predicting the path of a moving object comprising:
storing long-term data including environment information affecting movement of the moving object;
obtaining, from a plurality of sensors tracking the moving object, real time data including sensor data characteristic of the moving object;
calculating parameters of simulations on the basis of the real-time data and the long-term data; and
executing simulations using said parameters to generate predicted paths of the moving object in an effort to track the moving object outside a range of the plurality of sensors.

15. Software in the form of computer-readable instructions which, when executed by a processor, perform the method of claim 14.

## Amended claims

### Amended claims in accordance with Rule 137(2) EPC.

1. A system for predicting the path of a moving object comprising:
real-time data sources including a plurality of sensor networks each having a plurality of sensors for outputting real-time data;
a sensor in a sensor network arranged to detect the moving object when the real-time data includes sensor data characteristic of a moving object;
a regional base station arranged to verify the detection of the moving object by corroborating the real-time data from the sensor with real-time data of other sensors in the sensor network;
long-term data sources including a database of environment information affecting movement of the moving object;
an analytics engine arranged to, once the detection of the moving object is verified, generate parameters of simulations on the basis of the real-time data and the long-term data; and
a prediction engine arranged to generate predicted paths of the moving object by executing simulations using said parameters to track the moving object through a geographical area outside a detection range of the plurality of sensor networks.

2. The system according to claim 1 wherein the analytics engine is further arranged to update the parameters as new real-time data is received.

3. The system according to claim 1 or 2 wherein the prediction engine is further arranged to receive the real-time data and to constrain the predicted paths on the basis of the real-time data.

4. The system according to any preceding claim wherein the simulations are executed as an ensemble of predictive models each differing in the parameters applied to the simulations.

5. The system according to claim 4 wherein probabilities are assigned to the predicted paths.

6. The system according to any preceding claim wherein the simulations are executed using agent-based modelling in which an agent represents the moving object and the parameters comprise rules of behaviour of agents.

7. The system according to any preceding claim wherein the simulations are executed using a machine learning technique in which the generated parameters of simulations are in the form of training data for the machine learning technique.

8. The system according to any preceding claim wherein the long-term data sources further include a database of historical information on past behaviour of objects of the same type as the moving object.

9. The system according to claim 8 wherein the analytics engine is further arranged to combine the historical information with the real-time data when generating said parameters.

10. The system according to any preceding claim wherein the real-time data sources further provide real-time data on one or more of:
time of day
day of week
weather conditions
public events
road works
traffic conditions.

11. The system according to any preceding claim wherein each sensor network is managed by the regional base station, each regional base station having a coverage area and linked to a central base station.

12. The system according to claim 11 wherein a predicted path is communicated from the central base station to at least one regional base station into the coverage area of which the predicted path extends.

13. The system according to claim 11 or 12 wherein the analytics engine and the prediction engine are provided by the central base station.

14. A computer-implemented method of predicting the path of a moving object comprising:
storing long-term data including environment information affecting movement of the moving object;
obtaining, from a plurality of sensors to detect and track the moving object, real-time data;
detecting the moving object when the real-time data, from a sensor of the plurality of sensors, includes sensor data characteristic of the moving object;
verifying the detection of the moving object by corroborating the real-time data from the sensor with real-time data of other sensors of the plurality of sensors;
once the detection of the moving object is verified, calculating parameters of simulations on the basis of the real-time data and the long-term data; and
executing simulations using said parameters to generate predicted paths of the moving object to track the moving object outside a detection range of the plurality of sensors.

15. Software in the form of computer-readable instructions which, when executed by a processor, perform the method of claim 14.
